# EUROPEAN PATENT SPECIFICATION

(11) **EP 0 492 873 B1**
(45) Date of publication and mention of the grant of the patent: **06.09.1995**
(21) Application number: 91311426.0
(22) Date of filing: 09.12.1991
(51) Int. Cl.: B60T 7/06

(54) **Operating mechanism for hydraulic cylinders**
Betätigungsmechanismus für Hydraulikzylinder
Mécanisme de commande pour cylindres hydrauliques

(30) Priority: 28.12.1990 GB 9028153
(43) Date of publication of application: 01.07.1992
(73) Proprietor: FORD MOTOR COMPANY LIMITED, Brentwood, Essex CM13 3BW (GB); FORD-WERKE AKTIENGESELLSCHAFT, 50725 Köln (DE); FORD FRANCE S. A., 92506 Rueil-Malmaison Cédex (FR)
(72) Inventor: Sturges, Graham William, Hornchurch, Essex RM12 4PX (GB); Goodrem, David William, Tilbury, Essex RM18 8AT (GB); Scanes, Thomas Collier, Chelmsford, Essex CM2 9BZ (GB)
(74) Representative: Messulam, Alec Moses

(56) References cited:
- EP-B- 0 021 647
- GB-A- 1 172 467
- US-A- 3 988 945

## Description

The present invention relates to operating mechanisms for devices such as hydraulic cylinders and in particular to operating mechanisms for motor vehicle clutch or brake master cylinders.

Conventional motor vehicle brake master cylinders are operated by a pedal lever mounted for pivotal movement by an operator between the rest position and an engaged position. The pedal is connected to the hydraulic cylinder by a link which is reciprocable in the plane of movement of the lever. The connection between the link and the lever usually comprises a clevis on the lever which is connected to a tongue or clevis on the link by means of a pivot pin which lies transversely to the plane of movement of the lever, the pin being held in place by a split pin. British Patent Specification GB-A-1,434,290 discloses a brake pedal assembly in which the tongue and clevis arrangement is replaced by abutments on the link and lever which engage each other when the lever is moved towards the engaged position.

Although such constructions are usually fully effective, errors in assembly or failure of the components of the connection can lead to the lever and link becoming detached from each other. The occurrence of such an event during the use of a vehicle could endanger the safety of the occupants of the vehicle.

In accordance with European Patent Specification EP-B-0021647, the arrangement disclosed in GB-A-1,434,290 was modified, so that the link extended from the abutment through a hole in the pedal, to an extent sufficient to ensure that the pedal and link would remain in engagement under all possible conditions, even if components normally locating the link with respect to the pedal failed or were omitted during assembly.

The interengaging abutments of the above arrangements must be capable of permitting sliding and rocking motion of the abutment on the link relative to that on the pedal. In order to reduce frictional resistance, it was proposed that the abutment on the link should be provided by a nylon bush. Nevertheless, such an arrangement did not provide the positive pivot point of the clevis connection and tended to produce jerky movement.

GB 1172467 discloses a cable operating mechanism in which a push rod is pivotally connected to a foot pedal.

The present invention provides a connection between a link and pedal with a positive pivot point, while retaining the failsafe mechanism disclosed in EP-B-0021647.

According to one aspect of the present invention an operating mechanism of a hydraulic cylinder comprises a lever adapted to be mounted for pivotal movement by an operator between a rest position and an engaged position, and a link adapted for connection at one end to a piston in the hydraulic cylinder and connected adjacent the other end to the lever for reciprocation by the lever in the plane of movement of the lever, the lever having a portion of channel section an aperture being provided in the base of the channel section, characterised in that a trunnion pivotally engages opposed walls of the channel section transversely of the plane of movement of the lever, said trunnion having a central aperture, the link extending through the central aperture of the trunnion to an extent sufficient to ensure engagement with the trunnion when the lever is in its rest position, irrespective of the position of the piston in the hydraulic cylinder, an abutment on the link engaging the trunnion on the side thereof adjacent the piston when the lever moves from the rest position towards the engage position the free end of the link extending through the aperture in the base of the channel section, a circumferential groove being provided in the link, said groove being located on the opposite side of the base of the channel section of the lever from the trunnion when the trunnion is engaged by the abutment, a spring clip being located in the groove and a spacer element extending between the spring clip and trunnion.

With the operating mechanism of the present invention, the link and pinion will pivot with respect to the lever as the lever moves between its rest and engage positions to provide positive pivotal location.

Preferably, means is provided for locating the abutment on the link in engagement with the trunnion. The link extends through an aperture in the base of the channel portion of the lever to an extent sufficient that it will be maintained in engagement with the lever at all possible positions of the lever and piston.

An embodiment of the invention is now described, by way of example only, with reference to the accompanying drawings, in which:-
Figure 1 is a side elevation of an operating mechanism in accordance with the present invention;
Figure 2 is a section along the lines II - II of Figure 1; and
Figure 3 is a part sectional side elevation of the clip/spring element used in the mechanism illustrated in Figure 2.

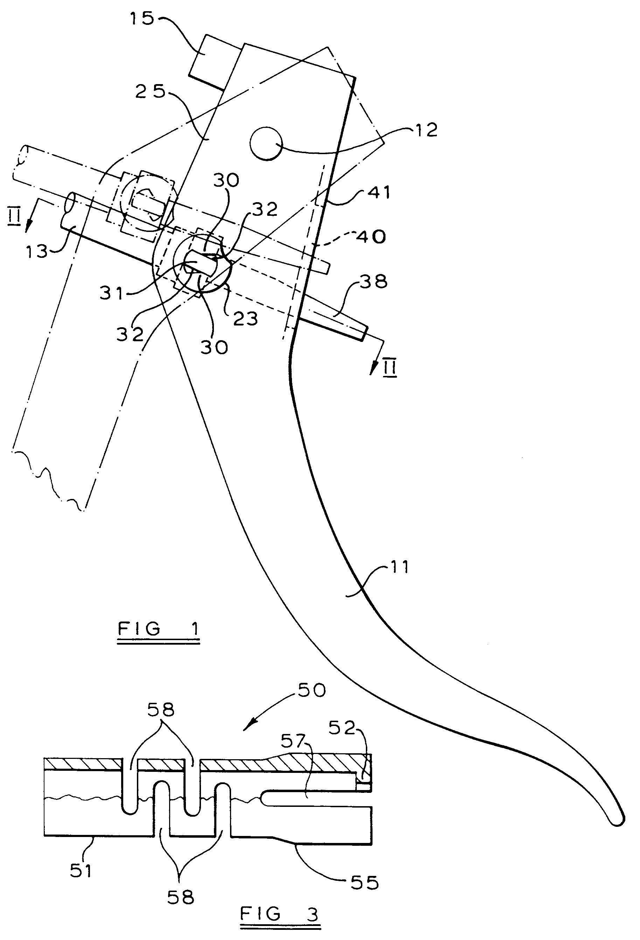

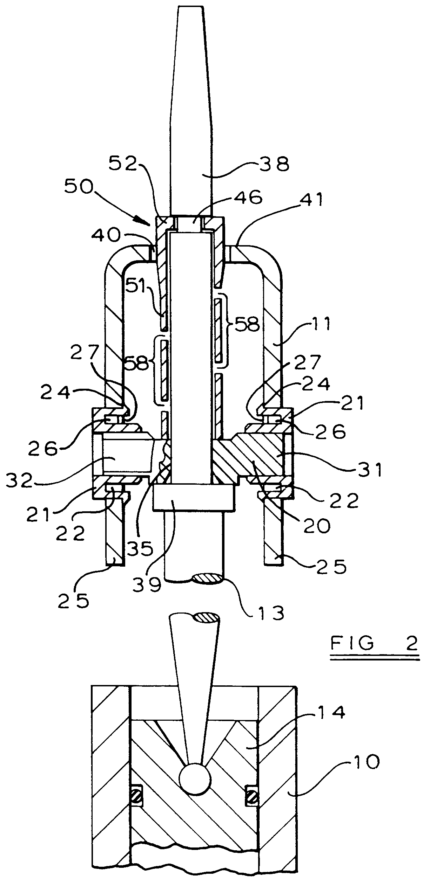

Figures 1 to 3 illustrate an operating mechanism for a brake master cylinder 10 of a motor vehicle. The operating mechanism comprises a pedal 11 mounted at its upper end for pivotal movement about a transverse pivot 12. The pedal 11 acts upon a push rod 13, the end of the pushrod 13 remote from the pedal 11 being pivotally connected to a piston 14 of the master cylinder 10, in conventional manner. The pedal 11 is able to move between a rest position (shown in full line in Figure 1) where it abuts a stop 15 and an engaged position (shown in broken line in Figure 1), the engaged position being defined by the extent of movement of the piston 14. The pedal 11 is biased to the rest position by spring means, in known manner.

The pedal 11 is of channel section, the channel section opening on the side adjacent to the master cylinder 10. A trunnion 20 is pivotally mounted in bushes 21 located through apertures 22 in the opposite walls 25 of the channel section pedal 11, the pivot axis of the trunnion 20 being transverse to the plane of movement of the pedal 11. The bushes 21 are made of self lubricating plastics material, each bush locating through an aperture 22, a flange 23 at one end of the bush 21 engaging the outer face of the wall 25 while clip formations 24 at the other end of the bush 21 engage the inner face of wall 25. Key formations 26 and 27 are provided on the bush 21 and aperture 22 respectively, to locate the bush 21 angularly with respect to the pedal 11. The internal diameter of each bush 21 has diametrically opposed raised portions 30 and the journals 31 of the trunnion 20 have corresponding flats 32, so that rotation of the trunnion 20 in bushes 21 is limited to an arc sufficient to accommodate relative pivotal movement between the pedal 11 and pushrod 13 as the pedal 11 moves between its rest and engaged positions.

The trunnion 20 has a transverse aperture 35. The end 38 of pushrod 13 remote from piston 14 is located through the aperture 35 and an abutment 39 adjacent end 38 of pushrod 13 is arranged to engage the trunnion 20. The end 38 of pushrod 13 extends beyond the trunnion 20 and through an elongate slot 40 in the base 41 of the channel section of pedal 11. The elongate slot 40 is of sufficient length to accommodate relative pivoting of the pedal 11 and pushrod 13 as the pedal 11 is moved between its rest and engaged positions. The width of the slot 40 is sufficient to accommodate the end 38 of pushrod 13 but is smaller than the diameter of abutment 39.

The end 38 of pushrod 13 is of sufficient length that it will extend through the elongate slot 40 in the pedal 11, when the pedal 11 is in its rest position, irrespective of the position of the piston 14 in the master cylinder 10.

To assemble the operating mechanism described above, the trunnion 20 is first located through apertures 22 and the bushes 21 are then introduced through the apertures 22 and clipped into place. The approximate orientation of the trunnion 20 is ensured by engagement of the flats 32 on journals 31 of the trunnion 20 with the raised portions 30 on the internal diameter of bushes 21.

The free end 38 of the pushrod 13 is then introduced through the aperture 35 in trunnion 20. The pushrod 13 may be pushed through the aperture 35 until the abutment 39 engages the trunnion 20. A circumferential groove 46 is provided on push rod 13 adjacent the free end 38 thereof, so that when abutment 39 engages the trunnion 20, the groove 46 will be located beyond the base 41 of the channel section of pedal 11, so that it is accessible. A combined clip/spring element 50, as described in greater detail below with reference to Figure 3, is then fitted over the free end 38 of push rod 13 and is pushed along the push rod 13 until the end of a spring portion 51 of the clip/spring element 50 abuts the trunnion 20 and a flange formation 52 engages in the groove 46. The clip/spring element 50 will thereby locate the push rod 13 axially with respect to the trunnion 20. The resilience of the spring portion 51 of the clip/spring element will accommodate tolerance variations in the axial dimensions of the push rod 13 and trunnion 20.

As illustrated in Figure 3 the clip/spring element 50 comprises a tubular member 55 having an inwardly directed flange formation 52 at one end. A pair of axially extending diametrically opposed slots 57 extend from the flange formation 52 part way along the length of the tubular member 55. Adjacent the other end of the tubular member 55 a series of transverse slots 58 extend part way across the tubular member 55, alternate slots 58 extending from opposite sides of the tubular member 55. The tubular member 55 is formed from a rigid flexible material, for example a plastics material or metal, so that slots 57 will allow the two halves of the flange formation 52 to flex outwardly and the slot 58 will produce an axially resilient spring portion 57. The material from which the clip/spring element 50 is made, its thickness and the spacing of slots 58 may be selected to give appropriate spring rates so that the flange formation 52 will be retained in groove 46 and the spring portion 51 will accommodate tolerance variations while locating the push rod 13 relative to the trunnion 20. The load applied by the spring portion 51 should not, of course, exceed the shear load of the flange formation 52.

Under normal operation of the actuating mechanism, loads will be transmitted from the pedal 11 to the pushrod 13 through the trunnion 20, thereby providing positive pivotal action which will produce smooth movement of the piston 14.

Even if the clip/spring element 50 is omitted during assembly or is accidentally displaced from the pushrod 13, the extended end 38 of pushrod 13 will ensure that the pushrod 13 will not become disengaged from the trunnion 20 and that the brakes may still be engaged when required by movement of pedal 11. Furthermore, in the event that the trunnion 20 should fail, the extended end 38 of pushrod 13 will still remain in engagement with the pedal 11 and the brakes could still be applied, upon movement of pedal 11, by engagement of the abutment 39 with the sides of the aperture 40.

Various modifications may be made without departing from the present invention. For example, while in the embodiment illustrated integral clip and spring means are used, separate clip means and spacer, preferably resilient, may alternatively be used.

## Claims

1. An operating mechanism for a hydraulic cylinder (10) comprising a lever (11) adapted to be mounted for pivotal movement by an operator between a rest position and an engaged position, and a link (13) adapted for connection at one end to a piston (14) in the hydraulic cylinder (10) and connected adjacent the other end (38) to the lever (11) for reciprocation by the lever (11) in the plane of movement of the lever (11), the lever (11) having a portion of channel section an aperture (40) being provided in the base (41) of the channel section, characterised in that a trunnion (20) pivotally engages opposed walls (25) of the channel section transversely of the plane of movement of the lever (11), said trunnion (20) having a central aperture (35), the link (13) extending through the central aperture (35) of the trunnion (20) to an extent sufficient to ensure engagement with the trunnion (20) when the lever (11) is in its rest position, irrespective of the position of the piston (14) in the hydraulic cylinder (10), an abutment (39) on the link (13) engaging the trunnion (20) on the side thereof adjacent the piston (14) when the lever (11) moves from the rest position towards the engage position, the free end (38) of the link (13) extending through the aperture (40) in the base (41) of the channel section, a circumferential groove (46) being provided in the link (13), said groove (46) being located on the opposite side of the base (41) of the channel section of the lever (11) from the trunnion (20) when the trunnion (20) is engaged by the abutment (39), a spring clip (52) being located in the groove (46) and a spacer element (51) extending between the spring clip (52) and trunnion (20).

2. A mechanism according to Claim 1 characterised in that journals (31) on the trunnion (20) are mounted in bushes (21), the bushes (21) being located through apertures (22) in opposite walls (25) of the channel section of the lever (11).

3. A mechanism according to Claim 2 characterised in that diametrically opposed projections (30) on the bearing surface of the bushes (21) engage with complementary formations (32) on the journals (31) of the trunnion (20) to restrict relative rotational movement of the trunnion (20).

4. A mechanism according to any one of the preceding claims characterised in that the spring clip (52) and spacer element (51) are of unitary construction.

5. A mechanism according to any one of the preceding claims characterised in that the spacer element (51) is axially resilient.

6. A mechanism according to any one of claims 1 to 5 characterised in that the end (38) of the link (13) is of sufficient length to locate through the aperture (40) in the lever (11) when the lever (11) is in its rest position, irrespective of the position of the piston (14) in the hydraulic cylinder (10), said aperture (40) in the lever (11) permitting pivoting of the link (13) relative to the lever (11) as the lever (11) moves between its rest and engaged positions whilst preventing passage of the abutment (39) on the link (13).

## Patentansprüche

1. Eine Betätigungseinrichtung für einen hydraulischen Zylinder (10), umfassend einen Hebel (11), der angepaßt ist, für eine durch einen Operateur veranlaßte schwingende Bewegung zwischen einer Ruhestellung und einer Betriebsstellung angebracht zu werden, und ein Verbindungsglied (13), das für die Verbindung an einem Ende mit einem Kolben (14) im hydraulischen Zylinder (10) ausgelegt ist und in der Nähe seines anderen Endes (38) mit dem Hebel (11) verbunden ist, um durch den Hebel (11) in der Bewegungsebene des Hebels (11) hin- und herbewegt zu werden, wobei der Hebel (11) einen kanalförmigen Abschnitt besitzt und eine Öffnung (40) im unteren Teil (41) des kanalförmigen Abschnitts angebracht ist, dadurch gekennzeichnet, daß ein Drehzapfen (20) schwenkbar gegenüberliegende Wände (25) des kanalförmigen Abschnitts transversal bezüglich der Bewegungsebene des Hebels (11) verbindet, wobei dieser Drehzapfen (20) eine zentrale Öffnung (35) besitzt, wobei sich das Verbindungsglied (13) durch die zentrale Öffnung (35) des Drehzapfens (20) in einem Maße erstreckt, das ausreicht, die Verbindung mit dem Drehzapfen (20) zu gewährleisten, wenn sich der Hebel (11) in seiner Ruhestellung befindet, ungeachtet der Stellung des Kolbens (14) im hydraulischen Zylinder (10), wobei ein Stoßteil (39) auf dem Verbindungsglied (13) den Drehzapfen (20) auf einer dem Kolben (14) nahen Seite davon berührt, wenn sich der Hebel (11) von seiner Ruhestellung in die Betriebsstellung bewegt, wobei sich das freie Ende (38) des Verbindungsgliedes (13) durch die Öffnung (40) im unteren Teil (41) des kanalförmigen Abschnitts erstreckt, wobei im Verbindungsglied (13) eine Rille (46) entlang des Umfangs bereitgestellt ist, wobei sich diese Rille (46) auf der dem Drehzapfen (20) entgegengesetzten Seite des unteren Teils (41) des kanalförmigen Abschnitts des Hebels (11) befindet, wenn der Drehzapfen (20) durch das Stoßteil (39) berührt wird, wobei sich ein Federbügel (52) in der Rille (46) befindet und sich ein Abstandshalter (51) zwischen dem Federbügel (52) und dem Drehzapfen (20) erstreckt.

2. Eine Einrichtung nach Anspruch 1, dadurch gekennzeichnet, daß die Achsenenden (31) des Drehzapfens (20) in Buchsen (21) angebracht sind, wobei sich die Buchsen (21) in Öffnungen (22) in gegenüberliegenden Wänden (25) des kanalförmigen Abschnitts des Hebels (11) befinden.

3. Eine Einrichtung nach Anspruch 2, dadurch gekennzeichnet daß diametral gegenüberliegende Auskragungen (30) auf den Trageflächen der Buchsen (21) mit komplementären Gebilden (32) auf den Achsenenden (31) des Drehzapfens (20) in Verbindung stehen, um die relative Drehbewegung des Drehzapfens (20) zu begrenzen.

4. Eine Einrichtung nach irgendeinem der vorhergehenden Ansprüche, dadurch gekennzeichnet, daß der Federbügel (52) und der Abstandshalter (51) aus einem Stück konstruiert sind.

5. Eine Einrichtung nach irgendeinem der vorhergehenden Ansprüche, dadurch gekennzeichnet, daß der Abstandshalter (51) axial elastisch ist.

6. Eine Einrichtung nach irgendeinem der Ansprüche von 1 bis 5, dadurch gekennzeichnet, daß das Ende (38) des Verbindungsgliedes (13) eine Länge besitzt, die ausreicht, daß es in die Öffnung (40) im Hebel (11) hineinragt, wenn sich der Hebel (11) in seiner Ruhestellung befindet, ungeachtet der Stellung des Kolbens (14) im hydraulischen Zylinder (10) wobei diese Öffnung (40) im Hebel (11) das Schwenken des Verbindungsgliedes (13) bezüglich des Hebels (11) erlaubt, wenn sich der Hebel (11) zwischen seiner Ruhestellung und seiner Betriebsstellung bewegt, wobei das Passieren des Stoßteils (39) über das Verbindungsglied (13) verhindert wird.

## Revendications

1. Mécanisme d'actionnement pour un cylindre hydraulique (10), comprenant un levier (11) conçu pour être monté à mouvement pivotant, sous l'action d'un opérateur, entre une position de repos et une position de mise en prise, et une pièce de liaison (13) destinée à être reliée, par l'une de ses extrémités, à un piston (14) logé dans le cylindre hydraulique (10), et reliée au levier (11), au voisinage direct de l'autre extrémité (38), afin d'être animée d'un va-et-vient par le levier (11), dans le plan de mouvement de ce levier (11), ledit levier (11) présentant une région de section transversale configurée en un canal, un orifice (40) étant prévu dans la base (41) de la section transversale configurée en canal, caractérisé par le fait qu'un tourillon (20) vient en prise pivotante avec des parois opposées (25) de la section transversale configurée en canal, transversalement par rapport au plan de mouvement du levier (11), ledit tourillon (20) étant percé d'un orifice central (35), la pièce de liaison (13) traversant l'orifice central (35) du tourillon (20) selon une distance suffisante pour assurer une venue en prise avec le tourillon (20) lorsque le levier (11) occupe sa position de repos, indépendamment de la position du piston (14) dans le cylindre hydraulique (10), une butée (39) située sur la pièce de liaison (13) coopérant avec le tourillon (20), sur le côté de ce dernier qui est adjacent au piston (14), lorsque le levier (11) se déplace de la position de repos vers la position de venue en prise, l'extrémité libre (38) de la pièce de liaison (13) traversant l'orifice (40) pratiqué dans la base (41) de la section transversale configurée en canal, une gorge circonférentielle (46) étant prévue dans la pièce de liaison (13), ladite gorge (46) étant située sur le côté de la base (41) de la section transversale en canal du levier (11) qui est tourné à l'opposé du tourillon (20) lorsque la butée (39) vient coopérer avec ce tourillon (20), une bride élastique (52) étant disposée dans la gorge (46), et un élément d'espacement (51) s'étendant entre la bride élastique (52) et le tourillon (20).

2. Mécanisme selon la revendication 1, caractérisé par le fait que des zones de portée (31) solidaires du tourillon (20) sont montées dans des coussinets (21), les coussinets (21) étant engagés à travers des orifices (22) ménagés dans des parois opposées (25) de la section transversale en canal du levier (11).

3. Mécanisme selon la revendication 2, caractérisé par le fait que des protubérances (30) diamétralement opposées, sur la surface de portée des coussinets (21), coopèrent avec des configurations complémentaires (32) situées sur les zones de portée (31) du tourillon (20), afin de limiter le mouvement rotatoire relatif dudit tourillon (20).

4. Mécanisme selon l'une quelconque des revendications précédentes, caractérisé par le fait que la bride élastique (52) et l'élément d'espacement (51) sont de structure mono-bloc.

5. Mécanisme selon l'une quelconque des revendications précédentes, caractérisé par le fait que l'élément d'espacement (51) est doué d'élasticité axiale.

6. Mécanisme selon l'une quelconque des revendications 1 à 5, caractérisé par le fait que l'extrémité (38) de la pièce de liaison (13) présente une longueur suffisante pour s'engager à travers l'orifice (40) pratiqué dans le levier (11) lorsque ce levier (11) occupe sa position de repos, indépendamment de la position du piston (14) dans le cylindre hydraulique (10), ledit orifice (40) pratiqué dans le levier (11) autorisant un pivotement de la pièce de liaison (13), par rapport au levier (11), lorsque ledit levier (11) se déplace entre ses positions de repos et de venue en prise, tout en interdisant un passage de la butée (39) située sur la pièce de liaison (13).
